# EUROPEAN PATENT APPLICATION

(11) **EP 0 585 930 A2**
(43) Date of publication of application: **09.03.1994**
(21) Application number: 93114087.5
(22) Date of filing: 02.09.1993
(51) Int. Cl.: G11B 5/31

(54) **Thin film magnetic head**

(30) Priority: 04.09.1992 US 941210
(71) Applicant: READ-RITE CORPORATION, Milpitas California 95035 (US)
(72) Inventor: Bischoff, Peter G., Cupertino, California 95014 (US); Tong, Hua-Ching, San Jose, California 95120 (US)
(74) Representative: Schmidt-Evers, Jürgen, Dipl.-Ing.

(57) **Abstract**

A thin film head is formed with first and second magnetic layers (P1, P2) of Permalloy that compose a magnetic yoke with a transducing gap (16) and includes a seed layer (24) deposited under the second magnetic layer (P2). The seed layer (24) is made of Fe-N-Al or Fe-N. The seed layer (24) may be sandwiched between oxide layers of silicon oxide or aluminum oxide. The seed layer (24) is characterized by high magnetic saturation and high permeability. The thin film head can provide a higher write field without change in head dimensions, or alternatively provide a smaller gap length without reducing the effectiveness of the write field. Linear recording density can be increased and the level of the playback signal can be improved with the thin film head using the seed layer (24) disclosed herein.

## Description

### Field of the Invention

This invention relates to a thin film magnetic head that is fabricated with improved magnetic layers.

### Description of the Prior Art

Thin film magnetic heads or transducers typically are fabricated with a ceramic substrate that supports two magnetic layers, made of Permalloy, designated as P1 and P2 poles that form a magnetic yoke with a transducing gap. During the production of the thin film heads, very thin films of Permalloy are deposited, by r.f. sputtering for example, prior to the deposition of the P1 and P2 layers respectively to serve as seed layers. The thin film head incorporates an electrical coil that is disposed between the P1 and P2 layers. A nonmagnetic insulating material encompasses the coil to isolate the conductive P1 and P2 layers electrically to prevent shorting.

Major objectives in the design of disk drives are to provide improved signal resolution and to increase linear recording density as well as data track density. It is known that increased coercivity Hc allows recording at a higher linear data density. The composition of Permalloy material presently used in thin film transducers limits the use of high coercivity disks.

### Summary of the Invention

An object of this invention is to provide a thin film magnetic transducer which affords improved record signal resolution and an improved playback signal in a data processing system.

Another object of this invention is to provide a thin film magnetic transducer that allows recording data at high linear data densities.

Another object is to provide a thin film magnetic transducer that can be used with high coercivity disks to achieve high linear recording densities.

A further object is to provide a thin film magnetic transducer that enables a reduction in gap length and allows recording at one-half pulse width.

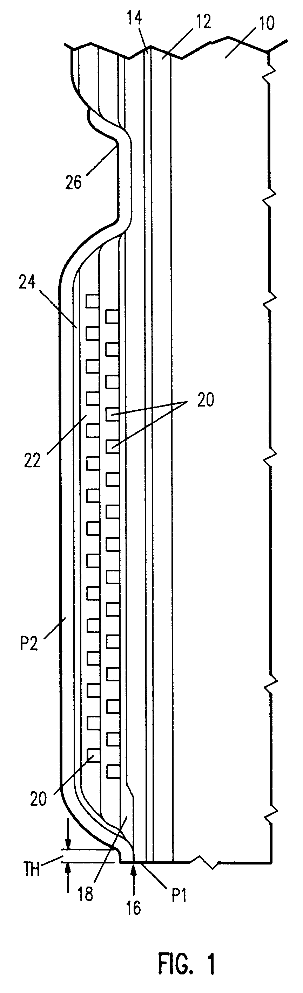

### Description of the Drawing

The invention will be described with reference to the sole figure which is a sectional view of a thin film magnetic transducer to aid in the explanation of the invention.

### Detailed Description of the Invention

As illustrated in the drawing, a thin film transducer includes a nonmagnetic ceramic substrate 10 which has been shaped, polished and cleaned prior to deposition of the thin film magnetic head structure. During production of the thin film head, a layer of aluminum oxide 12 typically is deposited on the polished smooth surface of the substrate 10. The oxide layer is lapped and polished to a desired thickness to eliminate defects. A seed layer 14 of a thin film of Permalloy is deposited over the insulating oxide layer 12. A first pole layer P1 of Permalloy is deposited to a thickness of about 100 nm (1000 Angstroms) over the entire wafer. A mask is used with standard photolithographic processes to form the pattern of the first pole layer P1 and an interconnect layer. The P1 pole layer is plated to a given thickness of about 3 microns.

After deposition of the P1 pole layer, a transducing gap 16 is provided by deposition of a thin layer of aluminum oxide, which is deposited over the entire surface of the P1 layer. An insulation layer 18 is then deposited and formed by baking and hardening a photoresist layer that is subsequently used to define the geometric pattern of the insulation layer. A coil assembly 20 is then fabricated over the insulation layer 18 and is defined by conventional masking and photolithography. The coil assembly 20 is then covered by another insulation layer 22 so that the two insulation layers 18 and 22 encompass the coil assembly 20, thereby preventing electrical shorting between the conductive P1 layer and P2 layer which is then deposited over the insulation layer 22. The upper pole piece P2 is fabricated with an interconnect 26 made of Permalloy so that a continuous magnetic yoke is formed with the P1 layer and the nonmagnetic transducing gap 16 therebetween. An overcoat insulation if provided for the thin film head structure and bonding pads are provided, as is well known in the art.

In accordance with this invention, prior to the deposition of the P2 layer, a seed layer 24 made of Fe-N-Al or Fe-N material is laid down by r.f. sputtering, for example to a thickness of about 0.5 micrometers (microns) or greater. The seed layer 24 is characterized by high permeability, about 4000 for example, and thicker high magnetic saturation Ms. The high permeability material of the seed layer 24 effectively improves the signal level of the head playback signal. The high magnetic induction (4πMs) is in the range of 2,0 - 2,1T (20-21 kiloGauss). It was found that the composition of the seed layer 24 allows the resultant thin film heads to be used with high coercivity disks having a coercivity Hc greater than 111,4 kA/m (1400 Oersteds), thus allowing an increase in linear density recording. The thin film head with the hybrid seed layer material allows a reduction in gap length without any adverse effect on the write field. A reduction in the half-pulse width with an increase in signal resolution is realized. With the use of the seed layer material disclosed herein, linear recording density can be significantly increased.

In an actual embodiment of the invention, the magnetic properties of the thin film head with a Fe-N-Al alloy thin film seed layer were as follows:
Magnetic induction (4πMs) of about 2,0-2,1T (20-21 kiloGauss)
Permeability of about 4000
Uniaxial anisotropy field Hk of about 318,308 -477,462 A/m (4-6 Oersteds)
Coercivity Hc of about 23,873 A/m (0.3 Oersteds)
The thin film head structure of this invention may be modified to include oxide layers of silicon oxide or aluminum oxide which sandwich the seed layer 24. The oxide layers are deposited by r.f. sputtering for example. Other modifications in design or dimensions may be made within the scope of this invention.

## Claims

1. A thin film magnetic head comprising:
a ceramic substrate (10);
a first seed layer (14) of magnetic material deposited above said substrate (10);
a first magnetic pole layer (P1) deposited over said first seed layer (14);
an electrical coil (20) deposited above said first magnetic pole layer (P1);
an insulating material (22) deposited around said coil (20);
a second seed layer (24) formed of a magnetic composition different than said magnetic material of said first seed layer (14) deposited above said insulating material (22);
a second magnetic pole layer (P2) deposited over said second seed layer (24), said first and second magnetic pole layers forming a magnetic yoke with a nonmagnetic tranducing gap (16).

2. A thin film magnetic head as in claim 1, wherein said magnetic composition is Fe-N-Al or Fe-N.

3. A thin film magnetic head as in claim 1, wherein said second seed layer (24) is sandwiched between layers of silicon oxide or aluminum oxide.

4. A thin film magnetic head as in claim 1, wherein the thickness of said second seed layer (24) is about 0.5 microns.

5. A thin film magnetic head as in claim 1, wherein the permeability of said second seed layer (24) is about 4000.

6. A thin film magnetic head as in claim 1, wherein the magnetic induction of said second seed layer (24) is in the range of about 2,0 - 2,1T (20-21kiloGauss).

7. A thin film magnetic head as in claim 1, wherein the anisotropy field Hk of said second seed layer (24) is in the range of about 318,308 - 477,462 A/m (4-6 Oersteds).

8. A thin film magnetic head as in claim 1, wherein the coercivity of Hc of said second seed layer (24) is about 23,873 A/m (0.3 Oersteds).
